# EUROPÄISCHE PATENTSCHRIFT

(11) **EP 0 366 996 B1**
(45) Veröffentlichungstag und Bekanntmachung des Hinweises auf die Patenterteilung: **15.09.1993**
(21) Anmeldenummer: 89119033.2
(22) Anmeldetag: 13.10.1989
(51) Int. Cl.: H02P 7/622

(54) **Drehfeldmotor an Einphasennetz**
Induction motor on single-phase network
Moteur à induction sur réseau monophasé

(30) Priorität: 28.10.1988 DE 8813560 U
(43) Veröffentlichungstag der Anmeldung: 09.05.1990
(73) Patentinhaber: SEW-EURODRIVE GMBH & CO., D-76642 Bruchsal (DE)
(72) Erfinder: Schmidt, Josef, D-7523 Graben-Neudorf 2 (DE); Trümpler, Walter, D-7500 Karlsruhe 41 (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- DE-B- 2 445 162
- CONFERENCE RECORD OF THE 1988 IEEE INDUSTRY APPLICATIONS SOCIETY ANNUAL MEETING

## Beschreibung

Die Erfindung betrifft einen Drehfeldmotor mit zwei räumlich zueinander versetzt angeordneten Wicklungen, dessen erste Wicklung mit ihrem einen Wicklungsanschluß direkt mit einer ersten Klemme eines Einphasennetzes verbunden ist und dessen zweite Wicklung über eine Steuerschaltung an den Gleichspannungsausgang eines Brückengleichrichters angeschlossen ist, wobei die Steuerschaltung eine bezüglich der Spannung des Einphasennetzes phasenverschobene Spannung bildet.

Der Betrieb von Drehfeldmotoren erfordert mindestens zwei in der Phasenlage versetzte Spannungen. Dies ist für den Anlaufvorgang zwingend erforderlich und wird ebenfalls benötigt, wenn betriebsmäßig hohe Drehmomente erreicht werden sollen. Liegt nur ein Einphasennetz vor, so muß aus diesem eine phasenverschobene Spannung abgeleitet werden. Es wurde schon vorgeschlagen, die Hilfsphase über einen Vorwiderstand zu erzeugen. Wegen der Verlustleistung ist dieses Verfahren nur für geringe Leistungen geeignet bzw. es wird nur als Anlaufschaltung verwendet, wobei die Hilfsphase nach dem Anlaufen des Motors abgeschaltet wird. Weiterhn wurde die Erzeugung einer Hilfsphase durch einen Zusatzkondensator vorgeschlagen, der eine gegenüber der Netzspannung phasenverschobene Spannung an der Hilfswicklung erzeugt. Ein wesentlicher Nachteil ist, daß der Kondensator nur für einen bestimmten Arbeitsvorgang optimiert werden kann. Bei einem für den Betrieb bestimmten Kondensator läuft der Antrieb bei kleiner Auslastung unrund und neigt zu starker Geräuschentwicklung. Bei hoher Last fehlt dem Antrieb das entsprechende Drehmoment.

Es ist weiterhin grundsätzlich möglich, die phasenverschobene Hilfsspannung auch elektronisch zu erzeugen. Es wurde schon vorgeschlagen, eine solche elektronische Hilfsphase als Starthilfe zu verwenden. Die phasenverschiebende Hilfsspannung wird durch Phasenanschnitt der Netzspannung erreicht. Daraus resultiert eine relativ kleine Spannung und die Hilfsphase erfordert einen entsprechend großen Strom. Dieses Verfahren konnte sich nicht durchsetzen. Weitere elektronische Schaltungen dienen lediglich zum Ein- und Ausschalten eines Anlaufkondensators (OE-PS 378 634).

Ein gattungsgemäßer Drehfeldmotor ist aus der DE-OS 24 45 162 bekannt. Es ist eine Hauptwicklung vorgesehen, die direkt am Einphasennetz liegt. Parallel zur Hauptwicklung ist ein Brückengleichrichter geschaltet, der eine versetzt zur Hauptwicklung angeordnete zweite Wicklung versorgt, wobei der Phasenversatz durch eine elektronische Schaltung gesteuert wird.

Nachteilig bei dieser Schaltung ist, daß Hauptwicklung und Wechselrichter jeweils parallel zum Netz liegen. Die Hilfswicklung kann nicht elektrisch um 90 Grad verschoben sein, da in diesem Falle kaum noch Spannungen vorhanden wären. Der Motor nach dem Stand der Technik muß vielmehr mit 45 Grad elektrischer Phasenverschiebung arbeiten, um noch eine hinreichende Spannungsausnutzung zu erreichen, was wiederum eine entsprechende von 90 Grad verschiedene Phasenlage der Wicklung voraussetzt. Dies insgesamt bedingt kein befriedigendes Betriebsverhalten im Hinblick auf Anlaufmoment, Anlaufstrom und Laufruhe.

Obwohl diese Schaltung grundsätzlich Vorteile gegenüber den vorgenannten aufweist und deren Nachteile weitgehend überwindet, ist die Anlaufstromüberhöhung sowie der Überspannungsschutz und insgesamt das Betriebsverhalten noch nicht optimal.

Der Erfindung liegt daher die Aufgabe zugrunde, einen Drehfeldmotor zu schaffen, der ein optimales Betriebsverhalten, insbesondere mit geringer Anlaufstromüberhöhung und hinreichendem Überspannungsschutz gewährleistet.

Erfindungsgemäß wird die genannte Aufgabe bei einem Motor der eingangs genannten Art dadurch gelöst, daS der Wechselspannungseingang des Brückengleichrichters in Reihe zwischen dem anderen Wicklungsanschluß der ersten Wicklung und der zweiten Klemme des Einphasennetzes geschaltet ist.

Wesentliche Vorteile des erfindungsgemäßen Motors bestehen in einem optimalen Rundlauf bei allen Lastzuständen und damit einem geräuscharmen Betrieb. Darüber hinaus gewährleistet der erfindungsgemäße Motor ein nahezu konstantes Drehmoment im gesamten Anlaufbereich. Er kann platzsparend ausgebildet und insgesamt in einem Klemmkasten untergebracht werden, wobei keine externen Bauelemente erforderlich sind. Insbesondere wird die Anlaufstromüberhöhung praktisch ausgeschaltet, so daß ein kontinuierlicher Momentenverlauf ohne Absätze und Stufen gegeben ist. Neben einer hohen Schalthäufigkeit ist ein direktes elektronisches Reversieren möglich. Bei Hubwercken kann ein übersynchroner Betrieb vorgenommen werden. Netzspannungstoleranzen haben einen geringen Einfluß auf das Verhalten des Motors. Der Einschaltstrom bzw. Anlaufstrom ist gering. Insgesamt kann die erfindungsgemäße Ausgestaltung kostengünstig und verschleißfrei ausgebildet sein.

Durch einen bevorzugterweise vorgesehenen Zwischenkreiskondensator wird das Einschaltverhalten verbessert. Es wird insbesondere ermöglicht, die Hilfswicklung um 90 Grad elektrisch gegenüber der Phase der Hauptwicklung verschoben zu betreiben. Insgesamt erreicht die erfindungsgemäße Ausgestaltung einen weitgehend blockierfesten Antrieb, geringe Netzrückwirkungen, hohe Pumpentstörung, die Möglichkeit zu einem übersynchronen Betrieb und damit die Eignung für den Einsatz bei einem Hubwerk.

Die erfindungsgemäßen Vorteile werden in einer bevorzugten Ausgestaltung insbesondere dadurch unterstützt, daß die Steuerschaltung einen Wechselrichter aufweist, der in Reihenschaltung mit der Hauptwicklung angeordnet ist und die Hilfswicklung speist.

Die Steuerschaltung selbst kann in verschiedener, auch an sich bekannter Weise ausgebildet sein. Während grundsätzlich entsprechend dem Stande der Technik die Sekundärwicklung über zwei wechselweise schaltbare Schalter mit einem gemeinsamen Pol des Gleichrichters verbunden sein können, während der andere Pol des Gleichrichters an einer Mittelanzapfung der Wicklung liegt, sieht eine bevorzugte Ausgestaltung zur Nutzung der gesamten Wicklungslänge der zweiten Wicklung vor, daß der Wechselrichter mindestens zwei nacheinander zwischen den beiden Polen des Gleichrichters angeordnete, wechselweise geschaltete elektrische Schalter aufweist, zwischen denen ein Anschluß der zweiten Wicklung eingeschaltet ist, wobei der andere Anschluß in geeigneter Weise jeweils je nach Schaltzustand der genannten zwei Schalter mit dem Pol des Gleichrichters, zu dem die Verbindung des ersten Anschlusses der Wicklung gerade geöffnet ist, verbindbar ist. Eine äußerst bevorzugte Ausgestaltung sieht hier vor, daß parallel zu den Schaltern Kondensatoren geschaltet sind, zwischen denen der zweite Anschluß der zweiten Wicklung abgegriffen wird, während darüber hinaus auch vorgesehen sein kann, daß parallel zu den ersten beiden Schaltern zwei weitere Schalter geschaltet sind, zwischen denen der zweite Anschluß der zweiten Wicklung abgegriffen wird und die im Gegentakt zu den zwei ersten Schaltern schaltbar sind. Die erste der beiden genannten Alternativen hat gegenüber der zweiten eine geringere Zahl von aktiven Schaltelementen. Auf jeden Fall ist wichtig, daß kein Mittelabgriff erfolgt, sondern die zweite Wicklung bei beiden Haltwellen immer insgesamt an den Gleichrichter schaltbar ist.

In weiterer bevorzugter Ausgestaltung ist vorgesehen, daß die Steuerschaltung eine Phasenlage von Netz- und Hauptwicklungsspannung erfassende Synchronisationsschaltung aufweist, wobei weiterhin eine Spannungszeitflächen lastabhängig ausregelnde Schaltung vorgesehen ist. Die Erfindung ermöglicht, daß unabhängig von der Belastung die Spannung der beiden Wicklungen immer mit 90 Grad elektrisch zueinander steht. Durch die lastbhängige Reglungsmöglichkeit werden mit Abnahmen der Belastung die Spannungen an beiden Motorwicklungen reduziert und damit erreicht, daß die Erregung nahezu unabhängig von Spannungsschwankungen ist. In weiterer bevorzugter Ausgestaltung ist ein parallel zur Hauptwicklung liegender Synchronisationstransformator vorgesehen, dessen Sekundärwicklung mit Eingängen von Komparatoren verbunden ist, deren weiterer Eingang am Ausgang des Gleichrichters anliegt. Hierdurch kann eine Umkehrung der Phasenlage, damit eine Reversierung der Drehrichtung des Motors erreicht werden.

In weiterer bevorzugter Ausgestaltung kann vorgesehen sein, daß dem Synchronisationstransformator ein Kondensator nachgeschaltet ist und/oder ein Reversierschalter.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnung im einzelnen erläutert sind. Dabei zeigt:
- Figur 1: eine bevorzugte Ausgestaltung des erfindungsgemäßen Drehfeldmotors;
- Figur 2: eine erste Ausgestaltung eines Wechselrichters; und
- Figur 3: eine weitere bevorzugte Ausgestaltung des Wechselrichters; und
- Figur 4: eine weitere äußerst bevorzugte Ausgestaltung des erfindungsgemäßen Drehfeldmotors mit Synchronisationsschaltung.

Der lediglich schematisch dargestellte erfindungsgemäße Drehfeldmotor 1 liegt an Netzanschlüssen 2 eines EinphasenWechselstromnetzes. Der Motor selbst weist zwei Wicklungen 3,4 auf, die räumlich zueinander versetzt angeordnet sind, beispielsweise als Statorwicklungen um einen Anker des Motors (nicht dargestellt). Die erste Hauptwicklung 3 ist mit einem ihrer Anschlüsse 6 an einer Klemme 2a des Netzes 2 verbunden, während der andere Anschluß 7 der Hauptwicklung 3 auf einen Brückengleichrichter 8, geführt ist, dessen zweiter Primäranschluß am Netzkontakt 2b liegt, während dem Gleichrichter 8 ein Wechselrichter 9 nachgeordnet ist, wobei zwischen beiden ein Kondensator 10 liegt. Der Wechselrichter 9 speist die weitere Motorwicklung 4 mit einer insbesondere um 90 Grad verschobenen Spannung relativ zur Spannung an den Netzanschlüssen 2 und damit an der ersten Motorwicklung 3. Der Wechselrichter 9 und damit die zweite Wicklung 4 sind daher in Reihe zur Hauptwicklung 3 geschaltet.

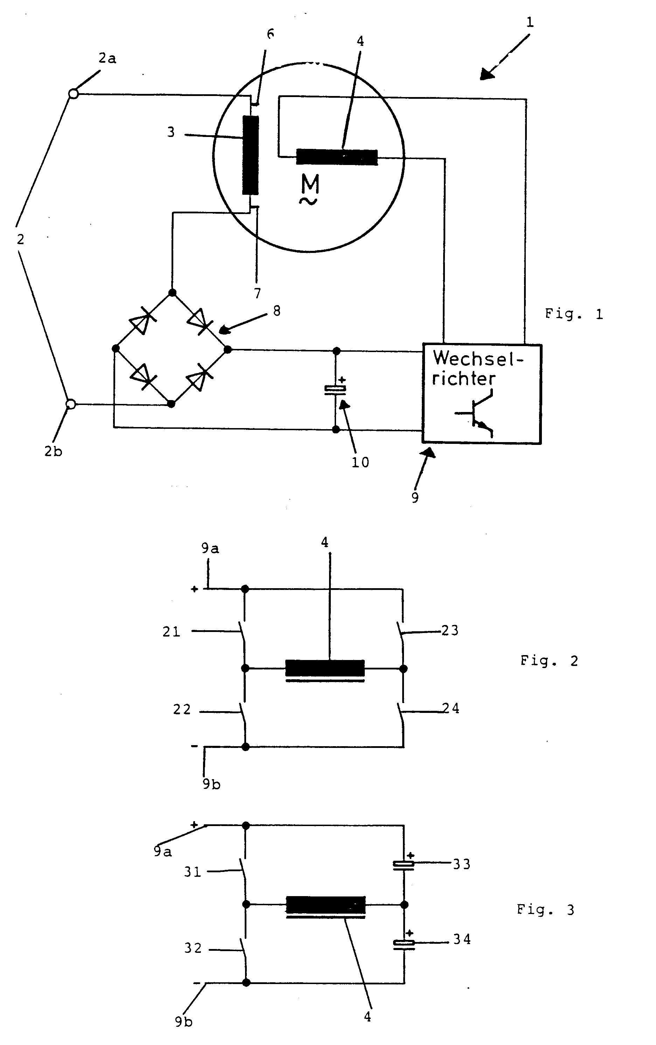

In den Figuren 2 und 3 ist der Wechselrichter durch schematisch dargestellte Schalter 21 bis 24 bzw. Schalter 31,32 und Kondensatoren 33,34 dargestellt, wobei die schematisch dargestellten Schalter elektronische Schalter repräsentieren. Weiterhin ist die Hilfswicklung 4 dargestellt. Die Anschlüsse 9a und 9b bezeichnen die Anschlüsse des Wechselrichters 9 (Figur 1) zum Gleichrichter 8 hin.

Bei der Ausgestaltung der Figur 2 schaltet der Wechselrichter 9 zwischen folgenden Schaltzuständen hin und her:
1. 21 und 24 geschlossen, 22 und 23 geöffnet;
2. 21 und 24 geöffent, 22 und 23 geschlossen.

Bei der Ausgestaltung der Figur 3 werden die Schalter 31,32 wechselweise geöffnet und geschlossen, wodurch die Kondensatoren 34,33 wechselweise über die Hilfswicklung 4 aufgeladen werden, während sie sich nach dem Umschalten über diese jeweils entladen, wobei der jeweils andere Kondensator aufgeladen wird.

Das Schalten selbst kann in an sich bekannter Weise, beispielsweise entsprechend einer Tastimpulsschaltung gemäß der DE-OS 24 45 162, erfolgen.

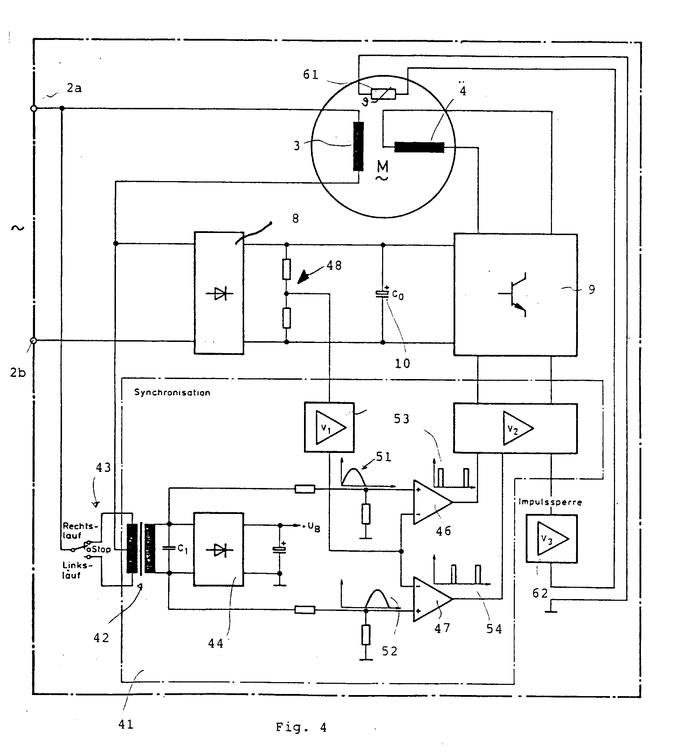

In der Figur 4 ist eine konkrete Ausgestaltung einer bevorzugten Synchronisationsschaltung 41 dargestellt. Die Synchronisationsschaltung 41 weist einen Synchronisationstransformator 42 auf, der über einen Schalter 43 parallel zur Hauptwicklung 3 des Motors M geschaltet ist. Der Schalter 43 ist als Wechselschalter ausgebildet. Durch Umschalten kann die Drehrichtung des Motors gewählt werden, indem die Verbindung jeweils zu der gegenüber der Mittelanzapfung der Primärwicklung des Transformators 42 zur rechten oder unteren Anzapfung des Transformators hergestellt wird.

Der Transformator versorgt weiterhin die Gesamtelektronik über den Gleichrichter 44 mit Energie der Betriebsspannung Ub. Dem Transformator ist ein Kondensator 1 nachgeschaltet, der die Phasenverschiebung von 90 Grad zwischen der Haupt- und der Hilfswicklung 3,4 des Motors M bewirkt. Die beiden Anschlüsse der Sekundärwicklung des Transformators führen auf (Plus-)Eingänge von Komparatoren 46, 47. Deren (Minus-) Eingang liegt über einem Verstärker V₁ am Ausgang des Gleichrichters 8. Derart wird die Spannung an der Hauptwicklung mit der Zwischenkreisspannung der elektronisch gesteuerten Wicklung verglichen. Durch Einstellung der Verstärkung oder Dämpfung des Verstärkers V₁ kann ein bestimmter Betriebszustand des Motors gewählt werden. An den angegebenen Stellen ergeben sich die als 51 - 54 dargestellten Kennlinien.

Die Ausgänge der Komparatoren 46, 47 wirken über einen Verstärker V₂ auf die Leistungstransistoren des Wechselrichters 9.

Die Regelung erfolgt nach dem Prinzip gegenseitiger Beeinflussung: wenn die Spannung im Zwischenkreis der Hilfswicklung, also am Kondensator Cₒ (bzw. 10) ansteigt, ergibt sich eine Vergrößerung der Impulsbreite hinter den Komparatoren, was wiederum eine Rezeptierung der Spannung am Kondensator Cₒ und damit eine Vergrößerung der Spannung an der Hauptwicklung zur Folge hat, bis eine vorgewählte Spannungsverteilung erreicht ist. Für den Fall, daß die Spannung am Kondensator Cₒ sinkt, verkleinert sich die Breite der Ausgangsimpulse der Komparatoren, wodurch sich wiederum eine optimale Spannung einpegeln kann.

Zusätzlich sieht eine bevorzugte Ausgestaltung der Erfindung in an sich bekannter Weise vor, daß im Motor ein Temperaturfühler 61 vorgesehen ist, der über einen Verstärker 62 auf den Verstärker V₂ bzw. den Wechselrichter 9 wirkt und diesen sperren kann, wodurch der Motor gestoppt wird, um ihn so gegen Übererwärmung zu schützen. In üblicher Weise kann der erfindungsgemäße Motor weiterhin mit einer Gleichstrombremse versehen sein.

## Patentansprüche

1. Drehfeldmotor mit zwei räumlich zueinander versetzt angeordneten Wicklungen (3,4), dessen erste Wicklung (3) mit ihrem einen Wicklungsanschluß (6) direkt mit einer ersten Klemme (2a) eines Einphasennetzes (2) verbunden ist und dessen zweite Wicklung (4) über eine Steuerschaltung (9) an den Gleichspannungsausausgang eines Brückengleichrichters (8) angeschlossen ist, wobei die Steuerschaltung (9) eine bezüglich der Spannung des Einphasennetzes (2) phasenverschobene Spannung bildet, dadurch gekennzeichnet, daß der Wechselspannungseingang des Brückengleichrichters (8) in Reihe zwischen dem anderen Wicklungsanschluß (7) der ersten Wicklung (3) und der zweiten Klemme (2b) des Einphasennetzes (2) geschaltet ist.

2. Motor nach Anspruch 1, dadurch gekennzeichnet, daß die Steuerschaltung einen Wechselrichter (9) aufweist.

3. Motor nach Anspruch 2, dadurch gekennzeichnet, daß der Wechselrichter mindestens zwei nacheinander zwischen den beiden Polen des Gleichrichters (8) angeordnete, wechselweise geschaltete elektrische Schalter (21-24; 31,32) aufweist, zwischen denen ein Anschluß der zweiten Wicklung eingeschaltet ist.

4. Motor nach Anspruch 3, dadurch gekennzeichnet, daß parallel zu den Schaltern (31,32) Kondensatoren (33,34) geschaltet sind, zwischen denen der zweite Anschluß der zweiten Wicklung (4) abgegriffen wird.

5. Motor nach Anspruch 3, dadurch gekennzeichnet, daß parallel zu den ersten beiden Schaltern (21,22) zwei weitere Schalter (23,24) geschaltet sind, zwischen denen der zweite Anschluß der zweiten Wicklung (4) abgegriffen wird und die im Gegentakt zu den zwei ersten Schaltern (21,22) schaltbar sind.

6. Motor nach einem der vorangehenden Ansprüche, dadurch gekennzeichnet, daß die Steuerschaltung eine Phasenlage von Netz- und Hauptwicklungsspannung erfassende Synchronisationsschaltung (41) aufweist.

7. Motor nach einem der vorangehenden Ansprüche, gekennzeichnet durch eine Spannungszeitflächen lastabhängig ausregelnde Schaltung (46, 47, 48, V1).

8. Motor nach Anspruch 7, gekennzeichnet durch einen parallel zur Hauptwicklung (3) liegenden Synchronisationstransformator (42), dessen Sekundärwirkung mit Eingängen von Komparatoren (46, 47) verbunden ist, deren weiterer Eingang am Ausgang des Gleichrichters (8) anliegt.

9. Motor nach Anspruch 8, dadurch gekennzeichnet, daß dem Synchronisationstransformator (42) ein Kondensator (C1) nachgeschaltet ist.

10. Motor nach einem der vorangehenden Ansprüche, gekennzeichnet durch einen Reversierschalter (43).

11. Motor nach einem der vorangehenden Ansprüche, gekennzeichnet durch einen mit der steuerschaltung (9, 41) verbundenen Thermofühler (61).

12. Motor nach einem der vorangehenden Ansprüche, dadurch gekennzeichnet, daß an ihm eine Gleichstrombremse angeordnet ist.

## Claims

1. Induction motor with two spatially displaced windings (3, 4), whose first winding (3) is connected by its one connection end (6) in direct manner to a first terminal (2a) of a single-phase network (2) and whose second winding (4) is connected across a control circuit (9) to the d.c. voltage output of a bridge-connected rectifier (8), the control circuit (9) forming a phase-displaced voltage with respect to the voltage of the single-phase network (2), characterized in that the a .c. voltage input of the bridge-connected rectifier (8) is connected in series between the other winding connection (7) of the first winding (3) and the second terminal (2b) of the single-phase network (2).

2. Motor according to claim 1, characterized in that the control circuit has an inverter (9).

3. Motor according to claim 2, characterized in that the inverter has at least two alternately connected, electrical switches (21-24; 31, 32) successively arranged between the two poles of the rectifier (8) and between which is connected a connection of the second winding.

4. Motor according to claim 3, characterized in that capacitors (33, 34) are connected in parallel to the switches (31, 32) and between said capacitors is tapped the second connection of the second winding (4).

5. Motor according to claim 3, characterized in that two further switches (23, 24) are connected in parallel to the first two switches (21, 22) and between said further switches is tapped the second connection of the second winding (4) and which are push-pull connected to the two first switches (21, 22).

6. Motor according to one of the preceding claims, characterized in that the control circuit has a synchronization circuit (41) determining the phase position of network and main winding voltage.

7. Motor according to one of the preceding claims, characterized by a circuit (46, 47, 48, V1) controlling voltage-time areas in load-dependent manner.

8. Motor according to claim 7, characterized by a synchronization transformer (42) parallel to the main winding (3) and whose secondary winding is connected to the inputs of comparators (46, 47) and whose further input is applied to the output of the rectifier (8).

9. Motor according to claim 8, characterized in that a capacitor (C1) is connected in series with the synchronization transformer (42).

10. Motor according to one of the preceding claims, characterized by a reversing switch (43).

11. Motor according to one of the preceding claims, characterized by a heat sensor (61) connected to the control circuit (9, 41).

12. Motor according to one of the preceding claims, characterized in that on it is provided a direct current brake.

## Revendications

1. Moteur à induction comprenant deux enroulements (3,4) espacés l'un de l'autre, le premier enroulement (3) étant relié directement par sa première connexion (6) d'enroulement à une première borne (2a) d'un réseau monophasé (2), et le deuxième enroulement (4) étant connecté par l'intermédiaire d'une commande de commutation (9) à la sortie de tension constante d'un pont redresseur (8), la commande de commutation (9) délivrant une tension déphasée par rapport à la tension du réseau monophasé (2), caractérisé en ce que l'entrée de tension alternative du pont redresseur (8) est montée en série entre l'autre connexion (7) d'enroulement du premier enroulement (3) et la deuxième borne (2b) du réseau monophasé (2).

2. Moteur selon la revendication 1, caractérisé en ce que la commande de commutation (9) comporte un onduleur.

3. Moteur selon la revendication 2, caractérisé en ce que l'onduleur comprend au moins deux interrupteurs électriques (21-24, 31, 32) commandés de façon alternative, disposés l'un après l'autre entre les deux pôles du redresseur (8), une connexion du deuxième enroulement étant branchée entre ces deux interrupteurs.

4. Moteur selon la revendication 3, caractérisé en ce que des condensateurs (33, 34) sont montés en parallèle sur les interrupteurs (31, 32), la deuxième connexion du deuxième enroulement (4) étant branchée entre ces deux condensateurs.

5. Moteur selon la revendication 3, caractérisé en ce que deux autres interrupteurs (23, 24) sont montés en parallèle sur les deux premiers interrupteurs (21, 22), la deuxième connexion du deuxième enroulement (4) étant branchée entre ces deux interrupteurs qui peuvent être commandés en opposition avec les deux premiers interrupteurs (21, 22).

6. Moteur selon l'une des revendications précédentes caractérisé en que la commande de commutation présente une commande de synchronisation (41) agissant sur la relation de phase entre la tension du réseau et la tension de l'enroulement principal.

7. Moteur selon l'une des revendications précédentes caractérisé par une commutation (46, 47, 48, V1) à régulation par surface tension-temps dépendant de la charge.

8. Moteur selon la revendication 7, caractérisé par un transformateur de synchronisation (42) placé en parallèle sur l'enroulement principal (3), le circuit secondaire de ce transformateur étant relié aux entrées de comparateurs (46, 47), dont l'autre entrée est placée à la sortie du redresseur (8).

9. Moteur selon la revendication 8, caractérisé en ce qu'un condensateur (C1) est branché à la suite du transformateur de synchronisation (42).

10. Moteur selon l'une des revendications précédentes, caractérisé par un interrupteur réversible (43).

11. Moteur selon l'une des revendications précédentes, caractérisé par un capteur de température (61) relié à la commande de commutation (9, 41).

12. Moteur selon l'une des revendications précédentes, caractérisé en ce qu'un frein à courant continu lui est associé.
